(19) Europäisches Patentamt
European Patent Office
Office européen des brevets

(11) Veröffentlichungsnummer: **0 013 909**
**B1**

(12) **EUROPÄISCHE PATENTSCHRIFT**

(45) Veröffentlichungstag der Patentschrift: **21.09.83**

(51) Int. Cl.³: **C 09 B 67/20,** C 09 D 17/00

(21) Anmeldenummer: **80100110.8**

(22) Anmeldetag: **10.01.80**

# (54) Pigmentdispersionen und ihre Verwendung.

(30) Priorität: **16.01.79 DE 2901462**

(43) Veröffentlichungstag der Anmeldung: **06.08.80 Patentblatt 80/16**

(45) Bekanntmachung des Hinweises auf die Patenterteilung: **21.09.83 Patentblatt 83/38**

(84) Benannte Vertragsstaaten: **BE CH DE FR GB IT NL SE**

(56) Entgegenhaltungen:
**DE-A-2 306 104**
**DE-A-2 520 527**
**DE-A-2 730 223**
**DE-B-1 064 075**
**FR-A-2 144 414**
**FR-A-2 269 568**
**FR-A-2 413 448**
**US-A-2 454 541**
**US-A-2 598 234**

(73) Patentinhaber: **HOECHST AKTIENGESELLSCHAFT, Postfach 80 03 20, D-6230 Frankfurt am Main 80 (DE)**

(72) Erfinder: **Dietz, Erwin, Dr., In den Padenwiesen 38, D-6233 Kelkheim (Taunus) (DE)**
Erfinder: **Grossmann, Max, Dr., Martin-Luther-Strasse 65, D-6000 Frankfurt am Main 60 (DE)**
Erfinder: **Maikowski, Michael, Dr., Heinrich-Bleicher-Strasse 54, D-6000 Frankfurt am Main 50 (DE)**

**EP 0 013 909 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pigmentdispersionen und ihre Verwendung

Gegenstand der vorliegenden Erfindung sind Pigmentdispersionen, die anorganische und/oder organische Pigmente, oxalkylierte mehrkernige Kondensationsprodukte aus aromatischen Hydroxyverbindungen und Alkanalen, Harnstoff und/ oder Verbindungen mit mindestens zwei langkettigen aliphatischen Resten, welche jeweils mehr als 9 Kohlenstoffatome enthalten und über Ester- oder Säureamidbindungen miteinander verknüpft sind, sowie Wasser und/oder Wasserrückhaltemittel enthalten. Sie eignen sich zum Pigmentieren natürlicher und synthetischer, vorzugsweise wässriger Systeme.

Aus der FR-A-2 144 414 und der DE-A-2 132 404 war es bekannt, Sulfobernsteinsäure-Halbester in Pigmentpräparationen für wässrige Flexodruckfarben zu verwenden. Aus der DE-A-2 520 527 waren wässrige Präparationen von in Wasser unlöslichen bis schwerlöslichen Farbstoffen, die ihre Wirkung nur in gelöstem Zustand entfalten, bekannt, in denen nichtionogene Dispergiermittel verwendet werden wie – im Beispiel 13 – Nonylphenol-Oxäthylat. Solche Nonylphenoloxäthylate sind zwar für die Dispergierung der in der DE-A-2 520 527 beschriebenen Dispersionsfarbstoffe geeignet, weniger jedoch für die Dispergierung von Pigmenten.

Die erfindungsgemässen Pigmentdispersionen, enthaltend Dispergiermittel auf Basis oxalkylierter Novolake aus aromatischen Hydroxyverbindungen und Alkanalen, Wasser und/oder Wasserrückhaltemittel und gegebenenfalls übliche Zusatzstoffe, sind gekennzeichnet durch einen Gehalt von 0,2 bis 40 Gew.-% an Harnstoff und/oder Verbindungen mit mindestens zwei langkettigen aliphatischen Resten, welche mehr als 9 Kohlenstoffatome enthalten und über Ester- oder Säureamidbindungen miteinander verknüpft sind, von 0,1 bis 40 Gew.-% an oxalkylierten Novolaken und von 5 bis 90 Gew.-% Wasser und/oder Wasserrückhaltemittel.

Als anorganische Pigmente geeignet sind beispielsweise Weiss- und Buntpigmente, wie Eisenoxide, Chromoxide, Zinksulfide, Cadmiumsulfide oder -selenide, Titandioxidpigmente, Nickel- oder Chromtitangelb, Chromatpigmente, Mischoxide des Kobalts und Aluminiums, ferner Russ und Verschnittpigmente. Als geeignete organische Pigmente sind beispielsweise zu nennen Azo- und Azomethinpigmente, Phthalocyanine, Chinacridone, Flavanthron-, Anthanthron- und Pyranthronkörper, Derivate der Perylentetracarbonsäure, der Naphthalintetracarbonsäure, des Thioindigos, des Dioxazins und des Tetrachlorisoindolinons und verlackte Pigmente. Es können auch Mischungen anorganischer und organischer Pigmente eingesetzt werden, beispielsweise Bleichromatpigmente mit organischen Gelb- oder Rotpigmenten.

Für die Herstellung der oben genannten Kondensationsprodukte aus aromatischen Hydroxyverbindungen und Alkanalen lassen sich Verbindungen der allgemeinen Formeln

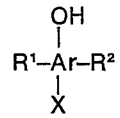 und 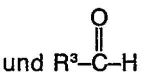

verwenden, in welchen Ar für das aromatische System des Benzols oder Naphthalins, $R^1$, $R^2$ und $R^3$ unabhängig voneinander für ein Wasserstoffatom oder einen Alkyl-, Alkenyl-, Aralkyl-, insbesondere Phenylalkyl-, oder Cycloalkylrest mit bis zu 30 Kohlenstoffatomen stehen, die durch –O–, –S–, $-NR^4-$, –CO–, –COO–, $-CONR^4-$ oder Arylen, insbesondere Phenylen, unterbrochen sein und Halogen-, insbesondere Chloratome, Hydroxy- oder Carboxygruppen tragen können; X steht für Wasserstoff, Halogen, insbesondere Chlor, $-OR^4$, $-COR^4$, $-COOR^4$ oder $-CONR^4R^5$, wobei $R^4$ und $R^5$ unabhängig voneinander Wasserstoffatome oder kurzkettige Alkylreste mit bis zu 6 Kohlenstoffatomen bedeuten.

Geeignete Vertreter aromatischer Hydroxyverbindungen sind beispielsweise Phenol und Alkyl- oder Dialkylphenole wie Kresole, Äthylphenole, Propylphenole, Butylphenole und bevorzugt Phenole mit längeren Alkylresten, wie beispielsweise Hexylphenole, Octylphenole, Nonylphenole, Dinonylphenole und Dodecylphenole. Es kommen auch Chlorphenole, Salicylsäure, Hydroxyacetophenon, p-Dimethylaminophenol, p-Acetamidophenol, 4,4′-Dihydroxydiphenyl, 4,4′-Dihydroxydiphenylmethan, Hydrochinon, Resorcin und Brenzkatechin, sowie die hieraus, z.B. durch Umsetzung mit Alkylhalogeniden und Alkylsulfaten, erhältlichen Äther, insbesondere niedere Alkyläther, sowie α-Naphthol, β-Naphthol, Alkylnaphthole und entsprechende Tetrahydronaphthole in Betracht.

Als Beispiele für die bei der Kondensation einsetzbaren Alkanale sind zu erwähnen Formaldehyd oder Formaldehyd abgebende Verbindungen wie Paraformaldehyd, Trioxan, Tetraoxymethylen oder Hexamethylentetramin; Acetaldehyd sowie Paraldehyd; Propionaldehyd, Butyraldehyd, Valeraldehyd, Önanthaldehyd und höhere lineare und verzweigte Aldehyde wie Laurinaldehyd, Palmitinaldehyd, Stearinaldehyd und Aldehyde aus der Oxosynthese, wie i-Nonanal, i-Tridecanal und i-Hexadecanal.

Sowohl die aromatischen Hydroxyverbindungen als auch die Alkanale können bei der Kondensation allein oder auch in Mischung mit anderen Vertretern ihrer Verbindungsklasse eingesetzt werden. Die Kondensation erfolgt in an sich bekannter Weise bei 20 bis 180 °C, vorzugsweise 50 bis 150 °C, mit einem molaren Überschuss an Hydroxyverbindung in Gegenwart eines sauren Katalysators. Die so erhaltenen Kondensationsprodukte werden als Novolake bezeichnet. Die aromatischen Hydroxyverbindungen und die Alkanale werden bei der Kondensationsreaktion

vorzugsweise im Molverhältnis 12:11 bis 2:1 eingesetzt. Das bei der Reaktion entstehende Wasser wird zunächst unter Normaldruck und anschliessend unter vermindertem Druck abdestilliert, bis im Endprodukt ein Wassergehalt von < 0,5 Gew.-% erreicht wird. Bevorzugte Kondensationsprodukte besitzen ein mittleres Molekulargewicht zwischen 400 und 5000 und enthalten auf je zwei aromatische Ringsysteme mindestens einen Alkylrest mit mehr als 5 Kohlenstoffatomen.

Die Oxalkylierung der Kondensationsprodukte kann in an sich bekannter Weise in Gegenwart von alkalischen Katalysatoren bei Temperaturen zwischen 100 und 210 °C erfolgen. Bevorzugte Verbindungen werden durch Umsatz der Kondensationsprodukte mit Äthylenoxid und/oder 1,2-Propylenoxid gewonnen, doch können zur Oxalkylierung auch Butylenoxid und Styroloxid verwendet werden. Werden mehrere Alkylenoxide, z.B. Äthylenoxid und Propylenoxid, angelagert, so können sie bei der Oxalkylierung entweder als Gemisch oder aber nacheinander im einfachen oder mehrmaligen Wechsel eingesetzt werden. Die im ersten Fall entstehenden Produkte werden als «Misch»-oxalkylate und die im letzteren Falle entstehenden Produkte als «Block»-oxalkylate bezeichnet.

Durch die Auswahl der aromatischen Hydroxyverbindungen und der Alkanale sowie durch die Art und Weise der Oxalkylierung hat es der Fachmann in der Hand, das Verhältnis von hydrophilen zu hydrophoben Gruppen im Molekül zu variieren und sowohl dem zu dispergierenden Pigment als auch dem Anwendungsmedium anzupassen. Durch Ersatz kleiner Alkylreste im Novolak durch grössere lässt sich beispielsweise die Hydrophobie des oxalkylierten Novolaks erhöhen; durch Steigerung des Äthylenoxidgehaltes wird die Hydrophilie erhöht. Ersetzt man bei gleichbleibendem Oxalkylierungsgrad Äthylenoxid durch Propylenoxid, so wird die Hydrophilie der Verbindung verringert. Eine weitere Möglichkeit, die Hydrophilie bzw. Hydrophobie der oxalkylierten Novolake zu beeinflussen, besteht darin, sie an den endständigen Hydroxygruppen der Polyoxyalkylenketten zu modifizieren. Die Hydrophilie lässt sich beispielsweise erhöhen durch Bildung der Halbester mit mehrbasischen anorganischen Säuren oder deren Derivaten, wie beispielsweise Schwefelsäure, Chlorsulfonsäure, Amidosulfonsäure, Phosphorsäure und Phosphoroxychlorid oder Phosphorpentoxid. Entsprechend lässt sich die Hydrophobie erhöhen, beispielsweise durch Umsetzung der endständigen Hydroxygruppe zu Estern, Äthern oder Urethanderivaten.

Häufig ist es günstig, in den Pigmentdispersionen zwei oder mehrere oxalkylierte Novolake zugleich einzusetzen, die sich in der Novolakkomponente, in den Alkylenoxidketten oder auch in beidem unterscheiden können. Dabei kommen sowohl wasserlösliche als auch -unlösliche Verbindungen in Betracht. Geeignete Oxalkylierungsgrade sind 2–100, bevorzugte 3 bis 30 Mol Alkylenoxid pro reaktionsfähige OH–Gruppe des Novolaks.

Als Verbindungen mit mindestens zwei, vorzugsweise zwei bis vier, insbesondere zwei oder drei langkettigen aliphatischen Resten, welche mehr als 9 und vorzugsweise bis zu 30, insbesondere bis zu 24 Kohlenstoffatome enthalten und über Ester- oder/und Säureamidbindungen miteinander verknüpft sind, die im folgenden als «Alkylverbindungen» bezeichnet werden, kommen vorzugsweise, und zwar einzeln oder als Gemische, in Frage:

a) Umsetzungsprodukte von entsprechend langkettigen Säuren mit langkettigen Alkoholen oder Aminen,
b) Umsetzungsprodukte von mehrwertigen Alkoholen, mehrwertigen Aminen oder von Aminoalkoholen mit langkettigen Säuren,
c) Umsetzungsprodukte von mehrbasischen Säuren mit langkettigen Alkoholen oder Aminen,
d) Umsetzungsprodukte von Aminosäuren oder Hydroxycarbonsäuren mit langkettigen Säuren und langkettigen Aminen bzw. Alkoholen,
e) Harnstoff- oder Urethanderivate, die durch Reaktion von langkettigen Isocyanaten mit langkettigen Aminen oder Alkoholen erhalten werden können und
f) Harnstoff- oder Urethanderivate, die durch Reaktion von mehrwertigen Isocyanaten mit langkettigen Aminen oder Alkoholen erhalten werden können.

Als langkettige Säuren mit mehr als 9 C-Atomen sind beispielsweise zu nennen Caprinsäure, Laurinsäure, Myristinsäure, Palmitinsäure, Stearinsäure, Arachinsäure, Behensäure, Montansäure, Ölsäure, Erucasäure, Linolsäure, Linolensäure, Ricinolsäure, Säuren aus der Oxo-Synthese sowie Säuregemische, wie sie aus natürlichen Rohstoffen gewonnen werden können, z.B. aus Kokosöl, Palmkernöl, Leinöl, Sojaöl, Sonnenblumenöl, Safloröl, Rüböl, Baumwollöl, Tallöl, Ricinusöl oder aus tierischen Fetten und Ölen wie Talg, Spermöl usw. Als langkettige Alkohole oder Amine mit mehr als 9 Kohlenstoffatomen kommen beispielsweise die Abkömmlinge der hier aufgeführten Carbonsäuren in Betracht, als mehrwertige Alkohole Glykole, wie z.B. Äthylen-, Diäthylen-, Propylen-, Butylen- und Hexylenglykol, Glycerin, Trimethylolpropan, Pentaerythrit und Sorbit, als mehrwertige Amine Äthylendiamin, Propylendiamin, Hexamethylendiamin, Diäthylentriamin, Triäthylentetramin, Piperazin und Diaminocyclohexan sowie Diamine mit langen Alkylresten wie Laurylpropylendiamin, Stearylpropylendiamin und Talgfettpropylendiamin; als Aminoalkohole Äthanolamin, Diäthanolamin, Triäthanolamin und Alkanolamine mit langkettigen Alkyl- oder Alkenylresten, wie z.B. N,N-Di-(hydroxyäthyl)-laurylamin, -stearylamin, -oleylamin und -cocosfettamin.

Als mehrbasische Säuren seien hier beispielsweise erwähnt Oxalsäure, Malonsäure, Bernsteinsäure, Adipinsäure, Korksäure, Sebacinsäure, Maleinsäure, Fumarsäure, Citronensäure, Phosphorsäure, Phosphonsäuren und als Amino- oder Hydroxycarbonsäuren Glycin, Alanin, Sar-

kosin, ε-Aminocapronsäure, Glykolsäure, Milchsäure, Äpfelsäure und Weinsäure.

Geeignete langkettige Isocyanate können beispielsweise aus den oben angeführten langkettigen Aminen hergestellt werden; hier seien nur Dodecyl-, Hexadeyl- und Octadecylisocyanat erwähnt. Geeignete Diisocyanate lassen sich in entsprechender Weise aus den oben erwähnten Diaminen herstellen. Als wichtige Vertreter seien genannt Hexamethylendiisocyanat und Isophorondiisocyanat sowie die aus Diisocyanaten herstellbaren höhermolekularen Polyisocyanate.

Als Wasserrückhaltemittel kommen im wesentlichen mehrwertige Alkohole, Glykoläther und Säureamide in Betracht, wie beispielsweise Äthylenglykol, Diäthylenglykol, Triäthylenglykol, niedermolekulare Polyäthylenglykole, Propylenglykole, Dipropylenglykole, niedermolekulare Polypropylenglykole, Butylenglykole, Hexylenglykole, Glycerin, Diglycerin, Pentaerythrit, Sorbit, Äthyl- oder Butyldiglykol und Formamid.

Als übliche Zusatzstoffe seien beispielsweise Konservierungsmittel, schaumreduzierende Substanzen, Antiabsetzmittel, Viskositätsregulatoren, Mahlhilfsmittel und die Pigmentbenetzung fördernde Substanzen genannt.

Die Herstellung der Pigmentdispersionen erfolgt in an sich bekannter Weise je nach Kornhärte der eingesetzten Pigmente, beispielsweise mit Sägezahnrührern (Dissolvern), Rotor-Stator-Mühlen, Kugelmühlen, Sand- oder Perlmühlen, in Knetapparaturen oder auf Walzenstühlen.

Die Pigmentdispersionen können Pigmentgehalte bis 80 Gew.-% aufweisen. Zu geringen Pigmentkonzentrationen hin ist keine technisch bedingte Grenze vorhanden. Bevorzugte Pigmentgehalte sind 5 bis 80 Gew.-%.

Der Gehalt der Pigmentdispersionen an oxalkylierten Novolaken kann in weiten Grenzen variieren, z.B. zwischen 0,1 und 40 Gew.-%; bevorzugte Gehalte sind 1 bis 25 Gew.-%.

Der Gehalt an Harnstoff und/oder Alkylverbindungen kann zwischen 0,2 und 40 Gew.-% liegen, bevorzugt zwischen 0,5 und 30 Gew.-%, wobei der Harnstoffgehalt zwischen 0 und 30 Gew.-%, bevorzugt zwischen 0 und 25 Gew.-%, der Gehalt an Alkylverbindung zwischen 0 und 10, bevorzugt zwischen 0 und 5 Gew.-% liegt.

Der Gehalt an Wasser und/oder Wasserrückhaltemitteln sowie Hilfsmitteln kann zwischen 5 und 90 Gew.-%, bevorzugt zwischen 10 und 70 Gew.-% liegen.

Oxalkylierte Kondensationsprodukte aus alkylgruppenhaltigen aromatischen Hydroxyverbindungen und Formaldehyd sind bekannt. Ihr wichtigstes Einsatzgebiet dürfte das Spalten von Erdöl-Wasser-Emulsionen sein, doch wird schon in der US-PS 2 454 541 erwähnt, dass sie u.a. auch als Dispergiermittel für Pigmente geeignet sind. Es hat sich nun überraschend herausgestellt, dass mit ihnen und mit Kondensationsprodukten, bei denen die Kondensation zum Novolak mit Seitenketten einführenden Alkanalen statt mit Formaldehyd vorgenommen wurde, sehr flockungsstabile Pigmentdispersionen hergestellt werden können, die auch beim Einrühren in Medien stabil bleiben, welche die Ausflockung stark fördernde Substanzen, wie z.B. Methyl- oder Methylhydroxyäthylcellulose, enthalten.

Gegenstand der Erfindung ist deshalb auch die Verwendung von Pigmentdispersionen, die Pigmente, oxalkylierte Novolake aus aromatischen Hydroxyverbindungen und Alkanalen sowie Wasser und/oder Wasserrückhaltemittel und gegebenenfalls übliche Hilfsmittel enthalten, zum Pigmentieren von wässrigen celluloseätherhaltigen Systemen. Solche Dispersionen eignen sich weiterhin zum Abmischen mit den universeller einsetzbaren erdindungsgemässen Dispersionen, die Harnstoff und/oder Alkylverbindungen enthalten, da damit keine systemfremden und möglicherweise unverträglichen Hilfsmittel eingeschleppt werden.

Der Vorteil der verbesserten Stabilität in celluloseätherhaltigen wässrigen Systemen lässt sich aber nur begrenzt nutzen, da die Viskosität von flüssigen Pigmentdispersionen, welche die oben genannten Kondensationsprodukte enthalten, häufig schon bei Raumtemperatur oder aber während längerer Lagerung bei erhöhter Temperatur, z.B. 50 °C, erheblich ansteigt, so dass die Dispersionen creme- oder pastenartige Konsistenz annehmen und sich nur noch schwer oder auch gar nicht im Anwendungsmedium verteilen lassen. Erfindungsgemäss lässt sich dieser Nachteil der genannten Dispersionen durch einen Gehalt an Harnstoff und/oder Alkylverbindungen beheben.

In vielen Fällen ist es vorteilhaft, wenn sowohl Harnstoff als auch die Alkylverbindungen in den Dispersionen enthalten sind. Diese Zusätze verbessern nicht nur in vielen Fällen die rheologischen Eigenschaften der Dispersionen, sondern erhöhen häufig auch ihre Farbstärke und Flokkungsstabilität und vermindern die Schaumbildung.

Die erfindungsgemässen Pigmentdispersionen lassen sich wegen ihrer guten Flockungs- und Lagerstabilität, ihrer hohen Ergiebigkeit (Farbstärke) und der Brillanz der damit zu erreichenden Farbtöne mit Vorteil sehr universell zum Pigmentieren sowohl natürlicher als auch synthetischer Materialien verwenden, wobei die Pigmentierung bevorzugt im wässrigen Medium erfolgt. Sie eignen sich beispielsweise hervorragend zum Pigmentieren von Druck- und Anstrichfarben auf Basis von Homo- und Mischpolymerisaten aus Acrylnitril, Acrylsäure und Methacrylsäure und ihren Estern, Butadien, Styrol, Vinylacetat und Vinylpropionat, oder verseiften Alkydharzen und Harz- oder Ölemulsionen. Sie sind ausserdem geeignet für die Herstellung von Druckfarben und Färbeflotten für Papier, Textilien oder Leder sowie für die Pigmentierung von Spinnlösungen. Ein wichtiges Anwendungsgebiet sind auch Anstrichfarben, die natürliche Bindemittel wie Stärke, Dextrin und pflanzliche oder tierische Leime oder auch Cellulosederivate enthalten, wie beispielsweise Methylcellulose, Methylhydroxyäthylcellulose, Hydroxymethylcellulose, Hydroxyäthylcellulose oder Carboxymethylcellulose.

Um die gute Flockungsbeständigkeit der erfindungsgemässen Pigmentdispersionen zu demonstrieren, werden in den Beispielen Ausfärbungen in einer «Prüfdispersion» genannten Binderfarbe auf Acrylharzbasis beschrieben. Die Binderfarbe enthält 200 Gewichtsteile stabilisiertes Rutilpigment, 240 Gewichtsteile Verschnittpigmente (vorwiegend Dolomit), 400 Gewichtsteile handelsübliche, für Binderfarben geeignete Acrylharzdispersion sowie als stark flockende Substanz 3,3 Gewichtsteile einer Methylhydroxyäthylcellulose, die in 2%iger wässriger Lösung bei 20 °C eine mittlere Viskosität von 4 Pas aufweist. Die restlichen 156,7 Gewichtsteile entfallen auf Wasser und die üblichen Stabilisierungsmittel.

Schlecht gegen Flockung stabilisierte Pigmentdispersionen flocken aus, wenn man sie von Hand in die Prüfdispersion einrührt. Wegen der relativ geringen Viskosität der Prüfdispersion gelingt es dann nur durch kräftige mechanische Durchmischung, die hohen Scherkräfte aufzubringen, die für eine Redispergierung der Teilchen erforderlich sind. In manchen Fällen ist die Redispergierung in der Prüfdispersion aber gar nicht oder nur unter Bedingungen möglich, die sich in der Praxis verbieten. Flockt eine Pigmentdispersion beim Einrühren in die Prüfdispersion aus, so wird nicht die volle Farbkraft des in ihr enthaltenen Pigments genutzt. Nach dem Aufstrich, z.B. auf Kunstdruckpapier, steigt die Viskosität der Anstrichfarbe durch Verdunsten oder Wegschlagen der Flüssigkeit in den Untergrund stark an. Deshalb gelingt es jetzt schon durch Überstreichen des leicht angetrockneten Anstrichfilms mit einem Pinsel oder durch Nachreiben mit dem Finger, an dieser Stelle das ausgeflockte Pigment zumindest zum Teil zu redispergieren. Die nachgeriebene Fläche ist dann kräftiger gefärbt als die angrenzende, nicht nachbehandelte Fläche. Dieser «Rub-out-Test» ist eine einfache, aber gute Prüfmethode für die Beurteilung der Flockungsbeständigkeit von Pigmentdispersionen.

Es wurde bereits erwähnt, dass Pigmentdispersionen, welche nicht die erfindungsgemässe Zusammensetzung aufweisen, sondern lediglich oxalkylierte Novolake enthalten, bei der Lagerung eine Viskositätszunahme bis hin zu Pastenkonsistenz erleiden können. Sie kann bei Raumtemperatur schon kurz nach der Herstellung eintreten, in manchen Fällen aber erst nach Tagen, Wochen oder gar Monaten. Eine Lagerung bei erhöhter Temperatur, z.B. bei 50 °C, lässt zwar nicht von vornherein gleiche Ergebnisse erwarten, gibt aber in der Regel schon in kürzerer Zeit Anhaltspunkte für die praktische Brauchbarkeit der untersuchten Dispersion. Die Lagerzeit lässt sich weiter raffen, wenn die Dispersion in einem geschlossenen Gefäss bei 65 °C gerührt wird, vermutlich weil dann Veränderungen, deren Geschwindigkeit bei der blossen Lagerung der Dispersion von Diffusionsprozessen kontrolliert wird, durch das mechanische Rühren beschleunigt werden. Wenn in den folgenden Beispielen eine Warmlagerung erwähnt wird, so wurde die Dispersion in einem Wasserbad von 65 °C 2 Stunden mit einem kräftigen Magnetrührer gerührt. Bei einigen Vergleichsdispersionen war der Rührfisch allerdings schon nach wenigen Minuten nicht mehr zu bewegen.

Die nachfolgenden Beispiele sollen die Erfindung erläutern, ohne sie einzuschränken. Alle Mengenangaben bedeuten Gewichtsteile.

Beispiel 1

In einem Doppelmuldenkneter werden
400 Teile C.I. Pigment Red 146 (Colour Index No. 12485) mit
80 Teilen eines Addukts von 88 Mol Äthylenoxid und nachfolgend 20 Mol Propylenoxid an 1 Mol eines Kondensationsproduktes aus 7 Mol Nonylphenol und 6 Mol Formaldehyd,
20 Teilen N-Oleyloleamid,
50 Teilen Harnstoff,
75 Teilen Äthylenglykol und
75 Teilen Glycerin angeteigt, 90 Minuten geknetet und anschliessend mit
298 Teilen Wasser, in denen
2 Teile Konservierungsmittel gelöst sind, verdünnt.

Die so hergestellte Pigmentdispersion bleibt auch bei der Warmlagerung flüssig. Sie lässt sich von Hand leicht in der Prüfdispersion verteilen und gibt farbstarke Aufstriche mit einwandfreiem Rub-out-Test.

Beispiel 1a

Ersetzt man in Beispiel 1 die 80 Teile des Block-Oxalkylats von 88 Mol Äthylenoxid und 20 Mol Propylenoxid durch 80 Teile eines Misch-Oxalkylats von 80 Mol Äthylenoxid und 25 Mol Propylenoxid an 1 Mol desselben Kondensationsprodukts von 7 Mol Nonylphenol und 6 Mol Formaldehyd, so erhält man eine Pigmentdispersion mit ebenso guter Warmlagerbeständigkeit, die, in die Prüfdispersion eingerührt, ebenfalls farbstarke Aufstriche mit gutem Rub-out-Test liefert.

Beispiel 1b

Ersetzt man in Beispiel 1 die 20 Teile N-Oleyl-Oleamid und die 50 Teile Harnstoff durch 35 Teile Äthylenglykol und 35 Teile Glycerin, so erhält man eine Pigmentdispersion, die, in die Prüfdispersion eingerührt, zwar farbstarke Aufstriche mit einwandfreiem Rub-out-Test ergibt, bei der Warmlagerung aber schon nach 10 Minuten Pastenkonsistenz annimmt.

Beispiel 1c

Ersetzt man in Beispiel 1 die 20 Teile N-Oleyloleamid durch 10 Teile Äthylenglykol und 10 Teile Glycerin, so erhält man eine Pigmentdispersion, die, in die Prüfdispersion eingerührt, farbstarke Aufstriche mit gutem Rub-out-Test ergibt, bei der Warmlagerung aber nach 25 Minuten Pastenkonsistenz annimmt.

Beispiel 1d

Ersetzt man in Beispiel 1 die 50 Teile Harnstoff durch 25 Teile Äthylenglykol und 25 Teile Glycerin, so erhält man eine Pigmentdispersion, die, in die Prüfdispersion eingerührt, farbstarke Aufstriche mit gutem Rub-out-Test ergibt, bei der Warmlagerung aber nach 15 Minuten Pastenkonsistenz annimmt.

Beispiel 2

In einem Doppelmuldenkneter werden
250 Teile C. I. Pigment Violet 23 (Colour Index No. 51319) mit
80 Teilen eines Addukts von 105 Mol Äthylenoxid an 1 Mol eines Kondensationsproduktes aus 7 Mol Nonylphenol und 6 Mol Formaldehyd,
60 Teilen eines Addukts von 42 Mol Propylenoxid an 1 Mol eines Kondensationsproduktes aus 7 Mol Nonylphenol und 6 Mol Formaldehyd,
20 Teilen Trioleylphosphat,
50 Teilen Harnstoff,
18 Teilen Äthylenglykol und
18 Teilen Glycerin angeteigt, 2 Stunden geknetet und dann mit
102 Teilen Äthylenglykol,
102 Teilen Glycerin und
198 Teilen Wasser, in dem
2 Teile Konservierungsmittel gelöst waren, verdünnt.

Die dünnflüssige Pigmentdispersion bleibt auch bei der Warmlagerung flüssig, lässt sich leicht in die Prüfdispersion einrühren und gibt farbstarke Aufstriche mit einwandfreiem Rub-out-Test.

Beispiel 2a

Ersetzt man in Beispiel 2 die 20 Teile Trioleylphosphat und die 50 Teile Harnstoff durch 35 Teile Äthylenglykol und 35 Teile Glycerin, so erhält man eine flüssige Pigmentdispersion, die bei der Warmlagerung Cremekonsistenz annimmt, jedoch nach dem Erkalten beim Rühren zumindest giessbar wird. Die Pigmentdispersion flockt beim Einrühren in die Prüfdispersion aus und gibt farbschwache, stumpfe Aufstriche mit schlechtem Rub-out-Test.

Beispiel 2b

Ersetzt man in Beispiel 2 die 50 Teile Harnstoff durch 25 Teile Äthylenglykol und 25 Teile Glycerin, so erhält man eine Pigmentdispersion, die sich bei der Warmlagerung ähnlich verhält wie die Pigmentdispersion von Beispiel 2a, aber in der Prüfdispersion nahezu gleich gute Ergebnisse bringt wie die Pigmentdispersion von Beispiel 2.

Beispiel 2c

Ersetzt man in Beispiel 2 die 20 Teile Trioleylphosphat durch 10 Teile Äthylenglykol und 10 Teile Glycerin, so verhält sich die so gewonnene Pigmentdispersion bei der Warmlagerung ähnlich wie die Pigmentdispersionen der Beispiele 2a und 2b. Sie gibt, in die Prüfdispersion eingerührt, aber ebenso farbstarke Aufstriche und so gute Rub-out-Teste wie die von Beispiel 2.

Beispiel 3

680 Teile Chromoxidgrün werden portionsweise in ein Gemisch aus
30 Teilen eines Addukts von 30 Mol Äthylenoxid an einen Novolak aus 2 Mol o-Kresol und 1 Mol i-Tridecanal,
30 Teilen eines Addukts von 31 Mol Äthylenoxid an einen Novolak aus 2 Mol i-Octylphenol und 1 Mol i-Tridecanal,
20 Teilen eines Addukts von 30 Mol Äthylenoxid an einen Novolak aus 3 Mol Nonylphenol und 2 Mol Formaldehyd,
5 Teilen Leinöl,
30 Teilen Harnstoff,
30 Teilen Glycerin,
30 Teilen Hexylenglykol,
30 Teilen Butyldiglykol,
109 Teilen Wasser,
1 Teil Konservierungsmittel und
5 Teilen Leinölfettsäure eingetragen und mit einem Dissolver bis zu einer Kornfeinheit $< 2\ \mu m$ gerührt. Die so erhaltene, gut fliessfähige Pigmentdispersion lässt sich leicht in die Prüfdispersion einarbeiten. Die Aufstriche lassen keine Flockungserscheinungen erkennen und weisen eine hohe Farbstärke auf.

Beispiel 4

Entsprechend Beispiel 3 wird eine Pigmentdispersion hergestellt, die folgende Komponenten enthält:
700 Teile Chromoxidgrün,
20 Teile eines Block-Copolymerisats, bei welchem nacheinander 18 Mol Äthylenoxid, 18 Mol Propylenoxid und nochmals 18 Mol Äthylenoxid an ein Kondensationsprodukt aus 9 Mol Nonylphenol und 8 Mol Formaldehyd angelagert wurden,
50 Teile eines Addukts von 10 Mol Äthylenoxid an 1 Mol Nonylphenol,
5 Teile N-Oleyloleamid,
70 Teile Diäthylenglykol,
80 Teile Propylenglykol,
69 Teile Wasser,
1 Teil Konservierungsmittel und
5 Teile Ölsäure.

Die Dispersion besitzt sehr gute rheologische Eigenschaften, die auch durch die Warmlagerung nicht negativ beeinflusst werden. Die Aufstriche der damit pigmentierten Prüfdispersion zeichnen sich durch hohe Farbstärke und einwandfreie Rub-out-Teste aus.

Beispiel 4a (Vergleich)

Werden in Beispiel 4 die 20 Teile des Block-Copolymerisats durch 20 Teile eines Addukts von 10 Mol Äthylenoxid an 1 Mol Nonylphenol ersetzt, so wird eine nicht giessbare Pigmentdispersion von cremiger Konsistenz erhalten.

Beispiel 5

550 Teile einer deckenden Version von C. I. Pigment Yellow 83 (Colour Index No. 21108) werden unter Zusatz von
40 Teilen eines Addukts von 90 Mol Äthylenoxid an einen Novolak aus 3 Mol Nonylphenol und 2 Mol Formaldehyd,

20 Teilen eines Addukts von 16 Mol Äthylenoxid an einen Misch-Novolak aus 1,5 Mol p-Kresol, 1,5 Mol Nonylphenol und 2 Mol Formaldehyd,
5 Teilen eines Addukts von 2 Mol Oleylamin an 1 Mol Hexamethylendiisocyanat,
35 Teilen Harnstoff,
60 Teilen Formamid,
60 Teilen Diäthylenglykol und
90 Teilen Wasser 1 Stunde in einem Doppelmuldenkneter geknetet.
Nach dem Verdünnen der Knetmasse mit weiteren
140 Teilen Wasser wird eine gut fliessfähige Pigmentdispersion erhalten,
die nach der Warmlagerung nur eine geringfügige Verdickung zeigt. Die Pigmentdispersion lässt sich besonders leicht im Prüfmedium verteilen. Die Färbungen zeichnen sich durch hohe Deckkraft aus und lassen beim Rub-out-Test nicht die geringsten Flockungserscheinungen erkennen.

Beispiel 6

Mit einem Dissolver (Sägezahnrührer) werden
400 Teile C. I. Pigment Blue 15 : 1 (Colour Index No. 74160) in ein Gemisch aus
120 Teilen des Addukts von 90 Mol Äthylenoxid an 1 Mol eines Kondensationsproduktes aus 3 Mol Nonylphenol und 2 Mol Formaldehyd,
50 Teilen Harnstoff,
20 Teilen Trioleylphosphat,
160 Teilen Äthylenglykol und
200 Teilen Wasser eingerührt, in einer Perlmühle 2 Stunden gemahlen und dann mit
48 Teilen Wasser, in denen
2 Teile Konservierungsmittel gelöst sind, verdünnt.

Die Pigmentdispersion verhält sich bei der Warmlagerung einwandfrei, lässt sich leicht in die Prüfdispersion einrühren und gibt farbstarke Aufstriche mit einwandfreiem Rub-out-Test.

Beispiel 6a (Vergleich)

Ersetzt man in Beispiel 6 die 120 Teile des Addukts von 90 Mol Äthylenoxid an 1 Mol des Kondensationsprodukts aus 3 Mol Nonylphenol und 2 Mol Formaldehyd durch 120 Teile eines Addukts von 30 Mol Äthylenoxid an 1 Mol Nonylphenol, so erhält man eine Pigmentdispersion, die beim Einrühren in die Prüfdispersion ausflockt und deshalb farbschwache, stumpfe Aufstriche mit schlechtem Rub-out-Test ergibt.

Beispiel 7

700 Teile Eisenoxidrot werden portionsweise in eine Mischung aus
60 Teilen eines Addukts von 105 Mol Äthylenoxid an ein Kondensationsprodukt aus 7 Mol Nonylphenol und 6 Mol Formaldehyd,
20 Teilen eines Esters aus o-Phosphorsäure und 2 Mol Wachsalkohol,
20 Teilen Harnstoff,
100 Teilen Äthylenglykol,
1 Teil Konservierungsmittel und
79 Teilen Wasser eingetragen und mit einem Dissolver bis zu einer Kornfeinheit < 2 µm dispergiert. Nach dem Verdünnen mit weiteren
20 Teilen Wasser wird eine gut fliessfähige Dispersion erhalten, die auch nach der Warmlagerung keine Verdickungserscheinungen zeigt. Die auf diese Weise erhaltene Dispersion lässt sich sehr leicht in die Prüfdispersion einrühren und führt zu farbstarken Aufstrichen sowie einem einwandfreien Rub-out-Test.

Beispiel 7a

Werden in Beispiel 7 die 20 Teile Harnstoff durch 20 Teile eines Esters aus o-Phosphorsäure und 2 Mol Wachsalkohol ersetzt, so wird eine gerade noch giessbare Pigmentdispersion erhalten.

Beispiel 7b

Werden in Beispiel 7 die 20 Teile des Esters aus o-Phosphorsäure und 2 Mol Wachsalkohol durch 20 Teile Harnstoff ersetzt, so wird eine giessbare Pigmentdispersion erhalten. Der Rub-out-Test lässt Flockungserscheinungen sichtbar werden.

Beispiel 7c

Werden in Beispiel 7 die 20 Teile des Esters aus o-Phosphorsäure und 2 Mol Wachsalkohol und die 20 Teile Harnstoff durch 20 Teile Äthylenglykol und 20 Teile Wasser ersetzt, so wird eine giessbare Pigmentdispersion erhalten, die sich nicht so einfach in das Prüfmedium einrühren lässt wie die Dispersion des Beispiels 7. Der Rub-out-Test lässt deutliche Flockungserscheinungen sichtbar werden.

Beispiel 7d (Vergleich)

Werden in Beispiel 7 die 60 Teile des Addukts von 105 Mol Äthylenoxid an ein Kondensationsprodukt aus 7 Mol Nonylphenol und 6 Mol Formaldehyd durch 60 Teile eines Addukts von 15 Mol Äthylenoxid an 1 Mol Nonylphenol ersetzt, so wird eine Dispersion erhalten, die deutlich schlechtere rheologische Eigenschaften besitzt als die Pigmentdispersion des Beispiels 7.

Beispiel 7e (Vergleich)

Werden in Beispiel 7c die 60 Teile des Addukts von 105 Äthylenoxid an ein Kondensationsprodukt aus 7 Mol Nonylphenol und 6 Mol Formaldehyd durch 60 Teile eines Addukts von 15 Mol Äthylenoxid an 1 Mol Nonylphenol ersetzt, so wird eine nicht fliessfähige Paste erhalten, die sich nur sehr schwer im Prüfmedium verteilen lässt. Ausserdem weisen die Rub-out-Teste auf starke Flockungserscheinungen hin.

Beispiel 8

500 Teile C. I. Pigment Orange 5 (Colour Index No. 12075) werden in einem Doppelmuldenkneter mit
35 Teilen eines Addukts von 46,5 Mol Äthylenoxid an einen Misch-Novolak aus 1,5 Mol p-Kresol, 1,5 Mol Nonylphenol und 2 Mol Formaldehyd,

60 Teilen eines Addukts von 45 Mol Äthylenoxid an einen Novolak aus 3 Mol Nonylphenol und 2 Mol Formaldehyd,
5 Teilen eines Addukts von 2 Mol Octadecylisocyanat an 1 Mol Talgfettpropylendiamin,
70 Teilen Harnstoff und
95 Teilen Äthylenglykol angeteigt und 1 Stunde geknetet. Anschliessend wird das Knetgut durch Zugabe von
35 Teilen Äthylenglykol,
198 Teilen Wasser und
2 Teilen Konservierungsmittel zu einer sehr gut fliessfähigen Pigmentdispersion verdünnt, welche die Warmlagerung ohne das Auftreten von Verdickungserscheinungen übersteht. Diese Pigmentdispersion zeichnet sich ausserdem durch eine leichte Verteilbarkeit in der Prüfdispersion, durch farbstarke, reine und brillante Färbungen sowie einen einwandfreien Rub-out-Test aus.

Beispiel 9

Mit einem Dissolver (Sägezahnrührer) werden
500 Teile C. I. Pigment Green 7 (Colour Index No. 74260) mit
100 Teilen eines Addukts von 105 Mol Äthylenoxid an 1 Mol des Novolaks aus 7 Mol Nonylphenol und 6 Mol Formaldehyd,
10 Teilen Glycerindistearat,
180 Teilen Äthylenglykol und
120 Teilen Wasser eingerührt, in einer Perlmühle 2 Stunden gemahlen und dann mit
88 Teilen Wasser, in dem
2 Teile Konservierungsmittel gelöst sind, verdünnt.

Die Pigmentdispersion verhält sich bei der Warmlagerung einwandfrei, lässt sich leicht in die Prüfdispersion einrühren und gibt farbstarke Aufstriche mit einwandfreiem Rub-out-Test.

Beispiel 9a (Vergleich)

Ersetzt man in Beispiel 9 die 100 Teile des Addukts von 105 Mol Äthylenoxid an 1 Mol des Novolaks aus 7 Mol Nonylphenol und 6 Mol Formaldehyd durch 100 Teile eines Addukts von 15 Mol Äthylenoxid an 1 Mol Nonylphenol, so erhält man eine Pigmentdispersion, die beim Einrühren in die Prüfdispersion ausflockt und deshalb sehr farbschwache Aufstriche mit schlechtem Rub-out-Test liefert.

Beispiel 10

In einem Doppelmuldenkneter werden
30 Teile eines Addukts von 224 Mol Äthylenoxid an 1 Mol eines Novolaks aus 9 Mol Nonylphenol und 8 Mol Formaldehyd,
30 Teile eines Block-Copolymerisats, welches durch Anlagerung von 42 Mol Propylenoxid und anschliessend 104 Mol Äthylenoxid an 1 Mol eines Novolaks aus 7 Mol Nonylphenol und 6 Mol Formaldehyd erhalten wurde,
40 Teile Natrium-dodecylbenzolsulfonat,
10 Teile Trioleylphosphat,
15 Teile Harnstoff und
20 Teile Wasser vorgelegt und
150 Teile 2,9-Dimethylchinacridon-Pigment portionsweise eingetragen. Nach einer Knetdauer von 1 Stunde wird die Knetmasse durch Zugabe von
105 Teilen Harnstoff und
2 Teilen Konservierungsmittel, gelöst in
300 Teilen Äthylenglykol und
298 Teilen Wasser, zu einer sehr gut fliessfähigen, leicht thixotropen Pigmentdispersion verdünnt, die auch nach der Warmlagerung gut fliessfähig ist. Diese Pigmentdispersion lässt sich leicht in der Prüfdispersion verteilen und führt zu farbstarken, reinen und brillanten Aufstrichen, die beim Rub-out-Test keine Flockungserscheinungen erkennen lassen.

Beispiel 11

Entsprechend Beispiel 7 wird eine Pigmentdispersion hergestellt, die folgende Zusammensetzung besitzt:
770 Teile Chromoxidgrün,
10 Teile eines Block-Copolymerisats, das durch Anlagerung von 12 Mol Äthylenoxid und 6 Mol Propylenoxid an 1 Mol eines Kondensationsprodukts aus 3 Mol Nonylphenol und 2 Mol Formaldehyd erhalten wurde,
40 Teile eines Addukts von 30 Mol Äthylenoxid an 1 Mol eines Kondensationsprodukts aus 3 Mol Nonylphenol und 2 Mol Formaldehyd,
5 Teile eines Kondensationsprodukts aus 1 Mol Äthylendiamin und 2 Mol Ölsäure,
20 Teile Harnstoff,
20 Teile Äthylenglykol,
20 Teile Diäthylenglykol,
20 Teile Triäthylenglykol,
89 Teile Wasser,
1 Teil Konservierungsmittel und
5 Teile Ölsäure.

Wird diese gut fliessfähige Pigmentdispersion in die Prüfdispersion eingerührt und auf Kunstdruckpapier aufgezogen, so werden intensive Färbungen erhalten, die beim Rub-out-Test keinerlei Flockungserscheinungen sichtbar werden lassen. Die guten rheologischen Eigenschaften werden durch eine Warmlagerung nicht negativ beeinflusst.

Beispiel 12

Eine Pigmentdispersion mit ebenso guten Eigenschaften wie die des Beispiels 11 wird durch die folgende Zusammensetzung erhalten:
770 Teile Chromoxidgrün,
10 Teile eines Block-Copolymerisats, das durch Anlagerung von 18 Mol Äthylenoxid, 18 Mol Propylenoxid und nochmals 18 Mol Äthylenoxid an 1 Mol eines Kondensationsprodukts aus 9 Mol Nonylphenol und 8 Mol Formaldehyd hergestellt wurde,
40 Teile eines Addukts von 224 Mol Äthylenoxid an 1 Mol eines Kondensationsprodukts aus 9 Mol Nonylphenol und 8 Mol Formaldehyd,
5 Teile N-Oleyloleamid,
30 Teile Harnstoff,
30 Teile Propylenglykol,
30 Teile Dipropylenglykol,

79 Teile Wasser,
1 Teil Konservierungsmittel und
5 Teile Ölsäure.

Beispiel 13

In einem Doppelmuldenkneter werden
120 Teile eines Addukts von 105 Mol Äthylenoxid an 1 Mol eines Novolaks aus 7 Mol Nonylphenol und 6 Mol Formaldehyd,
10 Teile eines Addukts von Octadecylisocyanat an Oleylamin,
100 Teile Harnstoff und
130 Teile Äthylenglykol vorgelegt und portionsweise
200 Teile eines Pigmentrusses mit einer spez. Oberfläche nach BET von 320 $m^2/g$ eingetragen. Nach einer Knetdauer von 1 Stunde wird das Knetgut mit
110 Teilen Äthylenglykol,
328 Teilen Wasser und
2 Teilen Konservierungsmittel verdünnt.

Die auf diese Weise erhaltene Pigmentdispersion besitzt gute rheologische Eigenschaften, welche sich bei der Warmlagerung nur geringfügig verschlechtern. Sie lässt sich leicht in die Prüfdispersion einrühren und führt zu farbtiefen Färbungen, die keinerlei Flockungserscheinungen erkennen lassen.

Beispiel 13a

Werden in Beispiel 13 die 10 Teile des Addukts von Octadecylisocyanat an Oleylamin durch 10 Teile Wasser ersetzt, so wird eine gut fliessfähige Russdispersion erhalten, die bei der Warmlagerung nur leichte Verdickungserscheinungen zeigt. Nach dem Einrühren in die Prüfdispersion werden farbstarke Aufstriche mit guten Rub-out-Testen erhalten, die mit denen von Beispiel 13 vergleichbar sind.

Beispiel 13b

Werden in Beispiel 13 die 100 Teile Harnstoff durch 100 Teile Äthylenglykol ersetzt, so wird eine leicht thixotrope fliessfähige Russdispersion erhalten, die bei der Warmlagerung merkliche Verdickungserscheinungen zeigt. Die Aufstriche der damit pigmentierten Prüfdispersion weisen eine etwas geringere Farbstärke auf als die des Beispiels 13, und die Rub-out-Teste lassen leichte Flockungserscheinungen erkennen.

Beispiel 13c

Werden in Beispiel 13 die 100 Teile Harnstoff durch 100 Teile Äthylenglykol und die 10 Teile des Addukts von Octadecylisocyanat an Oleylamin durch 10 Teile Wasser ersetzt, so wird eine fliessfähige Pigmentdispersion erhalten, die starke Thixotropieerscheinungen und beim Rub-out-Test deutliche Flockungserscheinungen zeigt. Bei der Warmlagerung treten ausserdem merkliche Verdickungserscheinungen auf.

Beispiel 13d (Vergleich)

Werden in Beispiel 13 die 120 Teile des Addukts von 105 Mol Äthylenoxid an 1 Mol eines Novolaks aus 7 Mol Nonylphenol und 6 Mol Formaldehyd durch 120 Teile eines Addukts von 15 Mol Äthylenoxid an 1 Mol Nonylphenol ersetzt, so wird eine Pigmentdispersion von cremeartiger Konsistenz erhalten, die nach kräftigem Rühren gerade noch giessbar ist.

Die Russdispersion lässt sich nur schwer in der Prüfdispersion verteilen und führt zu farbschwachen Aufstrichen, die beim Rub-out-Test starke Flockungserscheinungen sichtbar werden lassen.

Beispiel 13e (Vergleich)

Werden in Beispiel 13c die 120 Teile des Addukts von 105 Mol Äthylenoxid an 1 Mol eines Novolaks aus 7 Mol Nonylphenol und 6 Mol Formaldehyd durch 120 Teile eines Addukts von 15 Mol Äthylenoxid an 1 Mol Nonylphenol ersetzt, so wird eine nicht fliessfähige Russpaste erhalten, die sich nur sehr schwer in der Prüfdispersion verteilen lässt. Die farbschwachen Aufstriche lassen beim Rub-out-Test ausserordentlich starke Flokkungserscheinungen sichtbar werden.

Beispiel 13f

Werden in Beispiel 13 die 120 Teile des Addukts von 105 Mol Äthylenoxid an 1 Mol eines Novolaks aus 7 Mol Nonylphenol und 6 Mol Formaldehyd durch 120 Teile eines Addukts von 91 Mol Äthylenoxid an 1 Mol eines Novolaks aus 7 Mol Nonylphenol und 6 Mol Formaldehyd, 70 Teile Äthylenglykol durch 70 Teile Harnstoff und 10 Teile Wasser durch 10 Teile des Addukts von Octadecylisocyanat an Oleylamin ersetzt, so wird eine Pigmentdispersion mit ebenso guten coloristischen Eigenschaften und mit noch günstigeren rheologischen Eigenschaften als die des Beispiels 13 erhalten. Bei der Warmlagerung dieser Russdispersion sind keinerlei Verdickungserscheinungen zu beobachten.

Beispiel 14

In einem Doppelmuldenkneter werden
400 Teile C. I. Pigment Yellow 83 (Colour Index No. 21108) mit
80 Teilen eines Addukts von 105 Mol Äthylenoxid an 1 Mol eines Kondensationsproduktes aus 7 Mol Nonylphenol und 6 Mol Formaldehyd,
50 Teilen Harnstoff,
20 Teilen des durch Kondensation von 1 Mol Oleoylsarkosin mit 1 Mol Oleylamin erhaltenen Amids,
100 Teilen Äthylenglykol und
100 Teilen Glycerin angeteigt, 90 Minuten geknetet und anschliessend mit
248 Teilen Wasser, in dem
2 Teile eines Konservierungsmittels gelöst sind, verdünnt.

Die so erhaltene Pigmentdispersion bleibt bei der Warmlagerung dünnflüssig. Sie lässt sich von Hand leicht in der Prüfdispersion verteilen und gibt farbstarke, brillante Aufstriche mit einwandfreiem Rub-out-Test.

Beispiel 14a

Ersetzt man in Beispiel 14 die 50 Teile Harnstoff und die 20 Teile des aus Oleoylsarkosin und Oleylamin gebildeten Amids durch 35 Teile Äthylenglykol und 35 Teile Glycerin, so erhält man eine Pigmentdispersion, die bei der Warmlagerung Cremekonsistenz annimmt.

Beispiel 14b
Ersetzt man in Beispiel 14 die 20 Teile des aus Oleoylsarkosin und Oleylamin gebildeten Amids durch 10 Teile Glykol und 10 Teile Glycerin, so erhält man eine Pigmentdispersion, die bei der Warmlagerung flüssig bleibt und fast ebenso farbstarke Aufstriche mit guten Rub-out-Testen liefert wie die Pigmentdispersion nach Beispiel 14.

Beispiel 14c
Ersetzt man in Beispiel 14 die 50 Teile Harnstoff durch 25 Teile Äthylenglykol und 25 Teile Glycerin, so erhält man eine Pigmentdispersion, die bei der Warmlagerung flüssig bleibt und fast ebenso farbstarke Aufstriche mit guten Rub-out-Testen liefert wie die Pigmentdispersion nach Beispiel 14.

Beispiel 14d (Vergleich)
Ersetzt man in Beispiel 14 die 80 Teile des Addukts von 105 Mol Äthylenoxid an 1 Mol eines Kondensationsproduktes aus 7 Mol Nonylphenol und 6 Mol Formaldehyd durch 80 Teile eines Addukts von 15 Mol Äthylenoxid an 1 Mol Nonylphenol, so erhält man eine Pigmentdispersion, die bei der Warmlagerung Pastenkonsistenz annimmt und nach Einrühren in die Prüfdispersion farbschwache, stumpfe Aufstriche gibt. Der Rub-out-Test zeigt, dass die Pigmentdispersion in der Prüfdispersion ausflockt.

Beispiel 14e
Ersetzt man in Beispiel 14 30 der 80 Teile des Addukts von 105 Mol Äthylenoxid an 1 Mol des Novolaks aus 7 Mol Nonylphenol und 6 Mol Formaldehyd durch 30 Teile des Natriumsalzes eines Tri-Schwefelsäurehalbesters eines Addukts von 18 Mol Äthylenoxid an 1 Mol des Novolaks aus 3 Mol Nonylphenol und 2 Mol Formaldehyd, so erhält man eine Pigmentdispersion, die bei der Warmlagerung dünnflüssig bleibt und nach Einrühren in die Prüfdispersion farbstarke Aufstriche mit einwandfreiem Rub-out-Test liefert.

**Patentansprüche**

1. Pigmentdispersionen, enthaltend Dispergiermittel auf Basis oxalkylierter Novolake aus aromatischen Hydroxyverbindungen und Alkanalen, Wasser und/oder Wasserrückhaltemittel und gegebenenfalls übliche Zusatzstoffe, gekennzeichnet durch einen Gehalt von 0,2 bis 40 Gew.-% an Harnstoff und/oder Verbindungen mit mindestens zwei langkettigen aliphatischen Resten, welche mehr als 9 Kohlenstoffatome enthalten und über Ester- oder Säureamidbindungen miteinander verknüpft sind, von 0,1 bis 40 Gew.-% an oxalkylierten Novolaken und von 5 bis 90 Gew.-% Wasser und/oder Wasserrückhaltemittel.

2. Pigmentdispersionen nach Anspruch 1, die oxalkylierte Novolake mit 2 bis 100 Mol Alkylenoxid pro reaktionsfähige aromatische Hydroxygruppe, wobei die Komponenten der Novolake aromatische Hydroxyverbindungen und Alkanale der allgemeinen Formeln

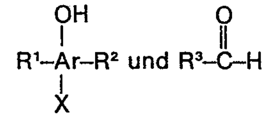

sind, in welchen Ar für das aromatische System des Benzols oder Naphthalins, $R^1$, $R^2$ und $R^3$ unabhängig voneinander für ein Wasserstoffatom oder einen Alkyl-, Alkenyl-, Aralkyl- oder Cycloalkylrest mit bis zu 30 Kohlenstoffatomen stehen, die durch –O–, –S–, $-NR^4-$, –CO–, –COO–, $-CONR^4-$ oder Arylen unterbrochen sein und Halogen, Hydroxy- oder Carboxygruppen tragen können, und in denen X für Wasserstoff, Halogen, $-OR^4$, $-COR^4$, $-COOR^4$ oder $-CONR^4R^5$ steht wobei $R^4$ und $R^5$ unabhängig voneinander Wasserstoffatome oder kurzkettige Alkylreste mit bis zu 6 Kohlenstoffatomen bedeuten, Harnstoff und/oder Verbindungen mit 2 bis 4 aliphatischen Resten mit mehr als 9 bis 30 Kohlenstoffatomen und Wasser und/oder als Wasserrückhaltemittel Säureamide, mehrwertige Alkohole, ihre Äther oder Mischungen der genannten Stoffe enthalten.

3. Pigmentdispersionen nach Ansprüchen 1 und 2, die als Novolake Verbindungen mit einem Molekulargewicht zwischen 400 und 5000 enthalten, welche auf jeweils 2 aromatische Ringsysteme mindestens einen Alkylrest mit mehr als 5 Kohlenstoffatomen enthalten.

4. Pigmentdispersionen nach Ansprüchen 1 bis 3, die als Novolake Kondensationsprodukte aus Alkylphenolen und Formaldehyd im Molverhältnis 12 : 11 bis 2 : 1 enthalten.

5. Pigmentdispersionen nach Ansprüchen 1 bis 4, die oxalkylierte Novolake enthalten, welche durch Umsetzen mit Äthylenoxid und/oder Propylenoxid erhalten werden.

6. Pigmentdispersionen nach Ansprüchen 1 bis 5, die oxalkylierte Novolake enthalten, bei deren Herstellung verschiedene Alkylenoxide in einfachem oder mehrfachem Wechsel eingesetzt werden.

7. Pigmentdispersionen nach Ansprüchen 1 bis 6, bei denen die endständigen Hydroxygruppen der oxalkylierten Novolake ganz oder teilweise durch Bildung von Halbestern, Estern, Äthern oder Urethanen modifiziert sind.

8. Pigmentdispersionen nach Ansprüchen 1 bis 7, die Ester oder Amide aus langkettigen Säuren und langkettigen Alkoholen bzw. langkettigen Aminen enthalten.

9. Pigmentdispersionen nach Ansprüchen 1 bis 7, die Ester oder Amide aus mehrwertigen Alkoholen, mehrwertigen Aminen oder Aminoalkoholen mit langkettigen Säuren enthalten.

10. Pigmentdispersionen nach Ansprüchen 1 bis 7, die Ester oder Amide aus mehrbasischen anorganischen oder organischen Säuren und langkettigen Alkoholen oder langkettigen Aminen enthalten.

11. Pigmentdispersionen nach Ansprüchen 1 bis 7, die Ester oder Amide aus langkettigen Säuren mit Hydroxycarbonsäuren oder Aminosäuren und langkettigen Alkoholen bzw. langkettigen Aminen enthalten.

12. Pigmentdispersionen nach Ansprüchen 1 bis 7, die Harnstoff- oder Urethanderivate aus langkettigen Isocyanaten und langkettigen Aminen bzw. langkettigen Alkoholen enthalten.

13. Pigmentdispersionen nach Ansprüchen 1 bis 7, die Harnstoff- oder Urethanderivate aus mehrwertigen Isocyanaten und langkettigen Aminen bzw. langkettigen Alkoholen enthalten.

14. Pigmentdispersionen nach Ansprüchen 1 bis 13, dadurch gekennzeichnet, dass sie 0 bis 30 Gew.-% Harnstoff und 0 bis 10 Gew.-% Verbindungen mit mindestens zwei aliphatischen Resten, welche mehr als 9 Kohlenstoffatome enthalten und über Ester- oder Säureamidbindungen miteinander verknüpft sind, enthalten.

15. Verwendung von Pigmentdispersionen nach Ansprüchen 1 bis 14 zum Pigmentieren natürlicher und synthetischer Materialien.

16. Verwendung von Pigmentdispersionen nach Ansprüchen 1 bis 14 zum Pigmentieren von wässrigen celluloseätherhaltigen Systemen.

**Claims**

1. Pigment dispersions containing dispersing agents on the basis of oxalkylated novolaks from aromatic hydroxy compounds and alkanals, water and/or water-retention agents and optionally usual additions, which comprise from 0.2 to 40 weight % of urea and/or compounds having at least two long-chain aliphatic radicals containing more than 9 carbon atoms and are linked with one another via ester or acid amide bonds, from 0.1 to 40 weight % of oxalkylated novolaks, and from 5 to 90 weight % of water and/or water-retention agents.

2. Pigment dispersions as claimed in Claim 1, which comprise oxalkylated novolaks having from 2 to 100 mols of alkylene oxide per reactive aromatic hydroxy group; the components of the novolaks being aromatic hydroxy compounds and alkanals of the general formulae

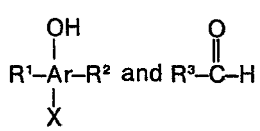

wherein Ar is the aromatic system of benzene or naphthalene; $R^1$, $R^2$ and $R^3$, independently of each other, are a hydrogen atom or an alkyl, alkenyl, aralkyl or cycloalkyl radical of up to 30 carbon atoms each, which groups may be interrupted by –O–, –S–, $-NR^4-$, –CO–, –COO–, $-CONR^4-$ or arylene and may carry halogen, hydroxy or carboxy groups; X is hydrogen, halogen, $-OR^4$, $-COR^4$, $-COOR^4$ or $-CONR^4R^5$, $R^4$ and $R^5$ being, independently of each other, hydrogen atoms or short-chain alkyl radicals of 1 to 6 carbon atoms, urea and/or compounds having from 2 to 4 aliphatic radicals containing more than 9 to 30 carbon atoms, and water and/or acid amides, polyhydric alcohols, their ethers or mixtures of these substances as water-retention agents.

3. Pigment dispersions as claimed in Claims 1 and 2, which as novolaks contain compounds having a molecular weight of from 400 to 5,000, which contain at least one alkyl radical having more than 5 carbon atoms per two aromatic ring systems each.

4. Pigment dispersions as claimed in Claims 1 to 3, which contain as novolaks condensation products of alkylphenols and formaldehyde in a molar ratio of 12 : 11 to 2 : 1.

5. Pigment dispersions as claimed in Claims 1 to 4, which contain oxalkylated novolaks obtained by reaction with ethylene oxide and/or propylene oxide.

6. Pigment dispersions as claimed in Claims 1 to 5, which contain oxalkylated novolaks in the preparation of which different alkylene oxides are used in simple or repeated alternation.

7. Pigment dispersions as claimed in Claims 1 to 6, wherein the terminal hydroxy groups of the oxalkylated novolaks are totally or partially modified by forming semiesters, esters, ethers or urethanes.

8. Pigment dispersions as claimed in Claims 1 to 7, which contain esters or amides deriving from long-chain acids and long-chain alcohols or long-chain amines.

9. Pigment dispersions as claimed in Claims 1 to 7, which contain esters or amides of polyhydric alcohols, polyamines or aminoalcohols and long-chain acids.

10. Pigment dispersions as claimed in Claims 1 to 7, which contain esters or amides of polybasic inorganic or organic acids and long-chain alcohols or long-chain amines.

11. Pigment dispersions as claimed in Claims 1 to 7, which contain esters or amides of long-chain acids with hydroxy-carboxylic acids or aminoacids and long-chain alcohols or long-chain amines.

12. Pigment dispersions as claimed in Claims 1 to 7, which contain urea or urethane derivatives from long-chain isocyanates and long-chain amines or long-chain alcohols.

13. Pigment dispersions as claimed in Claims 1 to 7, which contain urea or urethane derivatives from polyvalent isocyanates and long-chain amines or long-chain alcohols.

14. Pigment dispersions as claimed in Claims 1 to 13, which comprise from 0 to 30 weight %, of urea and from 0 to 10 weight %, of compounds having at least two aliphatic radicals which contain more than 9 carbon atoms and are linked with one another via ester or acid amide bonds.

15. Use of pigment dispersions as claimed in Claims 1 to 14 for pigmenting natural or synthetic materials.

16. Use of pigment dispersions as claimed in Claims 1 to 14 for pigmenting aqueous systems containing cellulose ether.

## Revendications

1. Dispersions pigmentaires, contenant des dispersants à base de novolaques alcoxylées formées de composés aromatiques hydroxylés et d'alcanals, de l'eau et/ou des agents de rétention d'eau et éventuellement des additifs courants, caractérisées en ce qu'elles contiennent de 0,2 à 40% en poids d'urée et/ou de composés ayant au moins deux radicaux aliphatiques à longue chaîne contenant plus de 9 atomes de carbone et qui sont liés les uns aux autres par des liaisons ester ou amide, de 0,1 à 40% en poids de novolaques alcoxylées et de 5 à 90% en poids d'eau et/ou d'agents de rétention d'eau.

2. Dispersions pigmentaires selon la revendication 1, caractérisées en ce qu'elles contiennent des novolaques alcoxylées ayant de 2 à 100 moles d'oxyde d'alkylène par groupe aromatique hydroxylé réactif, les constituants des novolaques étant des composés aromatiques hydroxylés et des alcanals de formule générale

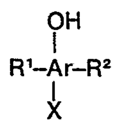 et 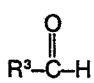

où Ar représente la charpente aromatique du benzène ou du naphthalène, $R^1$, $R^2$ et $R^3$ sont, indépendamment les uns des autres, un atome d'hydrogène ou un radical alkylene, alcényle, aralkyle ou cycloalkyle ayant jusqu'à 30 atomes de carbone et qui peuvent être interrompus par –O–, –S–, $-NR^4-$, –CO–, –COO–, $-CONR^4-$ ou un arylène et qui peuvent porter des groupes halogènes, hydroxy ou carboxy, et où X représente l'hydrogène, un halogène, $-OR^4$, $-COR^4$, $-COOR^4$ ou $-CONR^4R^5$, $R^4$ et $R^5$ étant, indépendamment l'un de l'autre, des atomes d'hydrogène ou des radicaux alkylene à chaîne courte ayant jusqu'à 6 atomes de carbone; de l'urée et/ou des composés possédant 2 à 4 radicaux aliphatiques ayant plus de 9 à 30 atomes de carbone; et de l'eau et/ou, en tant qu'agents de rétention d'eau, des amides, des polyalcools, leurs éthers ou des mélanges des substances mentionnées.

3. Dispersions pigmentaires selon l'une quelconque des revendications 1 ou 2, caractérisées en ce qu'elles contiennent en tant que novolaques des composés ayant une masse moléculaire comprise entre 400 et 5000, qui, chaque fois sur deux systèmes cycliques aromatiques, contiennent au moins un radical alkyle ayant plus de 5 atomes de carbone.

4. Dispersions pigmentaires selon l'une quelconque des revendictions 1 à 3, qui contiennent en tant que novolaques des produits de condensation d'alkylphénols et de formaldéhyde, dans un rapport molaire compris entre 12 : 11 et 2 : 1.

5. Dispersions pigmentaires selon l'une quelconque des revendications 1 à 4, caractérisées en ce qu'elles contiennent des novolaques alcoxylées obtenues par une réaction avec de l'oxyde d'éthylène et/ou de l'oxyde de propylène.

6. Dispersions pigmentaires selon l'une quelconque des revendications 1 à 5, caractérisées en ce qu'elles contiennent des novolaques alcoxylées lors de la production desquelles on utilise différents oxydes d'alkylène, en alternances simples ou multiples.

7. Dispersions pigmentaires selon l'une quelconque des revendications 1 à 6, caractérisées en ce que les groupes hydroxy terminaux des novolaques alcoxylées sont, en totalité ou en partie, modifiés par la formation de semi esters, d'esters, d'éthers ou d'uréthannes.

8. Dispersions pigmentaires selon l'une quelconque des revendications 1 à 7, caractérisées en ce qu'elles contiennent des esters ou des amides d'acides à longue chaîne et d'alcools ou d'amines à longue chaîne.

9. Dispersions pigmentaires selon l'une quelconque des revendications 1 à 7, caractérisées en ce qu'elles contiennent des esters ou des amides de polyalcools, de polyamines ou d'aminoalcools et d'acides à longue chaîne.

10. Dispersions pigmentaires selon l'une quelconque des revendications 1 à 7, caractérisées en ce qu'elles contiennent des esters ou des amides de polyacides organiques ou inorganiques et d'alcools ou d'amines à longue chaîne.

11. Dispersions pigmentaires selon l'une quelconque des revendications 1 à 7, caractérisées en ce qu'elles contiennent des esters ou des amides d'acides à longue chaîne et d'acides hydroxycarboxyliques ou d'acides aminés et d'alcools à longue chaîne ou d'amines à longue chaîne.

12. Dispersions pigmentaires selon l'une quelconque des revendications 1 à 7, caractérisées en ce qu'elles contiennent des dérivés de l'urée ou de l'uréthanne obtenus à partir d'isocyanates à longue chaîne et d'amines à longue chaîne ou d'alcools à longue chaîne.

13. Dispersions pigmentaires selon l'une quelconque des revendications 1 à 7, caractérisées en ce qu'elles contiennent des dérivés de l'urée ou de l'uréthanne obtenus à partir de polyisocyanates et d'amines à longue chaîne ou d'alcools à longue chaîne.

14. Dispersions pigmentaires selon l'une quelconque des revendications 1 à 13, caractérisées en ce qu'elles contiennent de 0 à 30% en poids d'urée et de 0 à 10% en poids de composés ayant au moins deux radicaux aliphatiques, qui contiennent plus de 9 atomes de carbone et qui sont liés les uns aux autres par des liaisons esters ou amide.

15. Utilisation de dispersions pigmentaires selon l'une quelconque des revendications 1 à 14, caractérisée en ce qu'elle sert à la pigmentation de matières naturelles et synthétiques.

16. Utilisation de dispersions pigmentaires selon l'une quelconque des revendications 1 à 14, caractérisée en ce qu'elle sert à la pigmentation de systèmes aqueux contenant de l'éther de cellulose.